(19) Europäisches Patentamt

European Patent Office

Office européen des brevets

(11) **EP 4 682 825 A1**

(12) # EUROPEAN PATENT APPLICATION

(43) Date of publication:
**21.01.2026 Bulletin 2026/04**

(21) Application number: **24188928.6**

(22) Date of filing: **16.07.2024**

(51) International Patent Classification (IPC):
**G06T 7/38** *(2017.01)*     **G06T 7/32** *(2017.01)*
**G06T 7/246** *(2017.01)*

(52) Cooperative Patent Classification (CPC):
**G06T 7/246; G06T 7/32; G06T 7/38;**
G06T 2207/10016; G06T 2207/10024;
G06T 2207/20164

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Harman Becker Automotive Systems
GmbH
76307 Karlsbad (DE)**

(72) Inventor: **NIKOLAEV, Alexey
76307 Karlsbad (DE)**

(74) Representative: **Westphal, Mussgnug & Partner,
Patentanwälte mbB
Werinherstraße 79
81541 München (DE)**

(54) **TIME SHIFT DETERMINATION UNIT AND METHOD FOR DETERMINING TIME SHIFTS**

(57)     Methods and system are herein provided for determining a time shift between images captured by means of different cameras. In one example, a time shift determination unit (200) comprises a computing device (210) comprising one or more processors (212) and a memory (214), wherein the computing device (210) is configured to determine a defined plurality of landmarks in each image of a first plurality of successive images of a defined environment (100) captured by means of a first camera (20-1), each landmark being defined by an x-coordinate and a y-coordinate in each of the respective images, determine the defined plurality of landmarks in each image of a second plurality of successive images of the defined environment (100) captured by means of a second camera (20-2), each landmark being defined by an x-coordinate and a y-coordinate in each of the respective images, for each image captured by means of the first camera (20-1) and the second camera (20-2), determine a mean x-coordinate or a mean y-coordinate for the defined plurality of landmarks in the image, compile a first chart representing a progression of the mean x-coordinate of the defined plurality of landmarks over the first plurality of successive images, and a second chart representing a progression of the mean x-coordinate of the defined plurality of landmarks over the second plurality of successive images, or compile a first chart representing a progression of the mean y-coordinate of the defined plurality of landmarks over the first plurality of successive images, and a second chart representing a progression of the mean y-coordinate of the defined plurality of landmarks over the second plurality of successive images, determine a similarity measure of the first chart and the second chart, perform a defined number of shifts of the second chart with respect to the first chart, wherein with each shift the second chart is shifted by a defined number of images, and for each shift of the plurality of shifts determine a similarity measure of the first chart and the shifted second chart, and evaluate the determined similarity measures in order to determine a time shift between the first plurality of successive images and the second plurality of successive images.

**(Cont. next page)**

EP 4 682 825 A1

800   START   802

determining a defined plurality of landmarks in each image of a first plurality of successive images of a defined environment captured by means of a first camera, each landmark being defined by an x-coordinate and a y-coordinate in each of the respective images

804

determining the defined plurality of landmarks in each image of a second plurality of successive images of the defined environment captured by means of a second camera,, each landmark being defined by an x-coordinate and a y-coordinate in each of the respective images

806

for each image captured by means of the first camera and the second camera, determining a mean x-coordinate or a mean y-coordinate for the defined plurality of landmarks in the image

808

compiling a first chart representing a progression of the mean x-coordinate of the defined plurality of landmarks over the first plurality of successive images, and a second chart representing a progression of the mean x-coordinate of the defined plurality of landmarks over the second plurality of successive images, or compiling a first chart representing a progression of the mean y-coordinate of the defined plurality of landmarks over the first plurality of successive images, and a second chart representing a progression of the mean y-coordinate of the defined plurality of landmarks over the second plurality of successive images

810

determining a similarity measure of the first chart and the second chart

812

performing a defined number of shifts of the second chart with respect to the first chart, wherein with each shift the second chart is shifted by a defined number of images, and for each shift of the plurality of shifts determine a similarity measure of the first chart and the shifted second chart

814

evaluating the determined similarity measures in order to determine a time shift between the first plurality of successive images and the second plurality of successive images

FIG 8   END

2

**Description**

TECHNICAL FIELD

Embodiments of the subject matter disclosed herein relate to a time shift determination unit and a related method for determining time shifts, and more particularly to methods for determining time shifts between images of a specific environment or scene captured by means of different cameras.

BACKGROUND AND SUMMARY

Different applications are known which capture images of a specific environment or scene by means of different cameras. Such images may subsequently be stitched together, e.g., in order to provide a surround view of the environment or scene. In many applications, the stitching, and therefore a synchronization of the images captured by means of the different cameras, is done in real time. However, other applications are known where images of an environment captured by means of different cameras are first stored in memory, and the stitching process will only be performed at a later point in time. In such cases, known methods for real time synchronization are generally not suitable, as a possible time shift between the images taken by means of the different cameras is not known.

There is a need for a time shift determination unit and related method that are able to reliably determine a time shift between images of a specific environment or scene captured by means of different cameras.

SUMMARY

In one example, a time shift detection unit includes a computing device comprising one or more processors and a memory, wherein the computing device is configured to determine a defined plurality of landmarks in each image of a first plurality of successive images of a defined environment captured by means of a first camera, each landmark being defined by an x-coordinate and a y-coordinate in each of the respective images, determine the defined plurality of landmarks in each image of a second plurality of successive images of the defined environment captured by means of a second camera, each landmark being defined by an x-coordinate and a y-coordinate in each of the respective images, for each image captured by means of the first camera and the second camera, determine a mean x-coordinate or a mean y-coordinate for the defined plurality of landmarks in the image, compile a first chart representing a progression of the mean x-coordinate of the defined plurality of landmarks over the first plurality of successive images, and a second chart representing a progression of the mean x-coordinate of the defined plurality of landmarks over the second plurality of successive images, or compile a first chart representing a progression of the mean y-coordinate of the defined plurality of landmarks over the first plurality of successive images, and a second chart representing a progression of the mean y-coordinate of the defined plurality of landmarks over the second plurality of successive images, determine a similarity measure of the first chart and the second chart, perform a defined number of shifts of the second chart with respect to the first chart, wherein with each shift the second chart is shifted by a defined number of images, and for each shift of the plurality of shifts determine a similarity measure of the first chart and the shifted second chart, and evaluate the determined similarity measures in order to determine a time shift between the first plurality of successive images and the second plurality of successive images.

In another example, a method includes determining a defined plurality of landmarks in each image of a first plurality of successive images of a defined environment captured by means of a first camera, each landmark being defined by an x-coordinate and a y-coordinate in each of the respective images, determining the defined plurality of landmarks in each image of a second plurality of successive images of the defined environment captured by means of a second camera, each landmark being defined by an x-coordinate and a y-coordinate in each of the respective images, for each image captured by means of the first camera and the second camera, determining a mean x-coordinate or a mean y-coordinate for the defined plurality of landmarks in the image, compiling a first chart representing a progression of the mean x-coordinate of the defined plurality of landmarks over the first plurality of successive images, and a second chart representing a progression of the mean x-coordinate of the defined plurality of landmarks over the second plurality of successive images, or compiling a first chart representing a progression of the mean y-coordinate of the defined plurality of landmarks over the first plurality of successive images, and a second chart representing a progression of the mean y-coordinate of the defined plurality of landmarks over the second plurality of successive images, determining a similarity measure of the first chart and the second chart, performing a defined number of shifts of the second chart with respect to the first chart, wherein with each shift the second chart is shifted by a defined number of images, and for each shift of the plurality of shifts determining a similarity measure of the first chart and the shifted second chart, and evaluating the determined similarity measures in order to determine a time shift between the first plurality of successive images and the second plurality of successive images.

It should be understood that the brief description above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

FIG. 1 schematically illustrates a plurality of cameras capturing images of a specific environment or scene;
FIG. 2 schematically illustrates different sequences of successive images of the specific environment or scene captured by different cameras of the plurality of cameras;
FIG. 3 shows landmarks detected in an image captured by a camera of the plurality of cameras.
FIG. 4 schematically illustrates a chart representing a progression of a mean pixel y-coordinate of a plurality of defined landmarks for a sequence of successive images captured by a camera of the plurality of cameras.
FIG. 5 schematically illustrates different charts representing progressions of a mean pixel y-coordinate of a plurality of defined landmarks for sequences of successive images captured by different cameras of the plurality of cameras.
FIG. 6 schematically illustrates similarity measures for different time shifts of two respective charts with respect to each other.
FIG. 7 schematically illustrates a time shift determination unit according to various embodiments of the disclosure.
FIG. 8 schematically illustrates a method according to various embodiments of the disclosure.

DETAILED DESCRIPTION

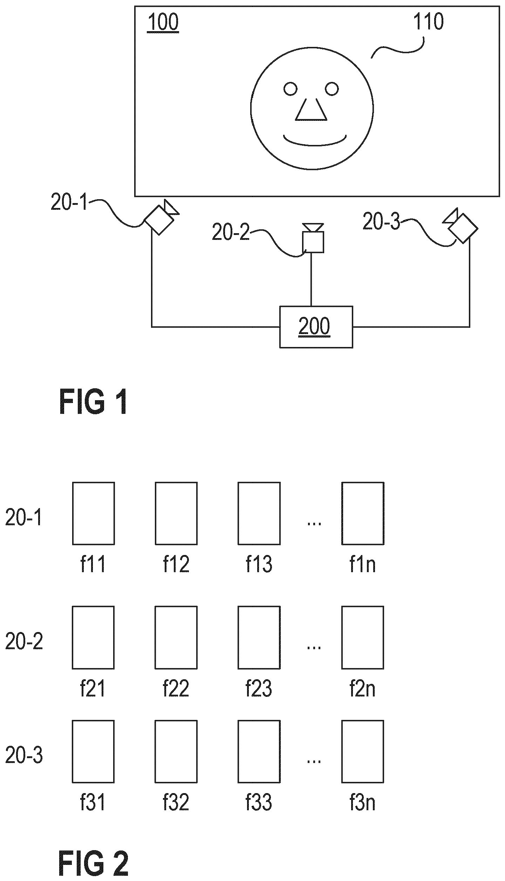

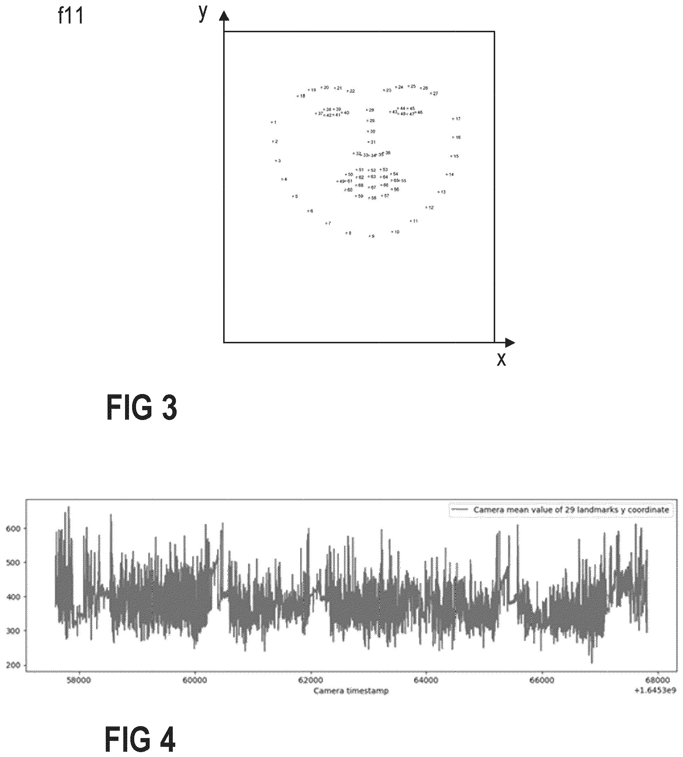

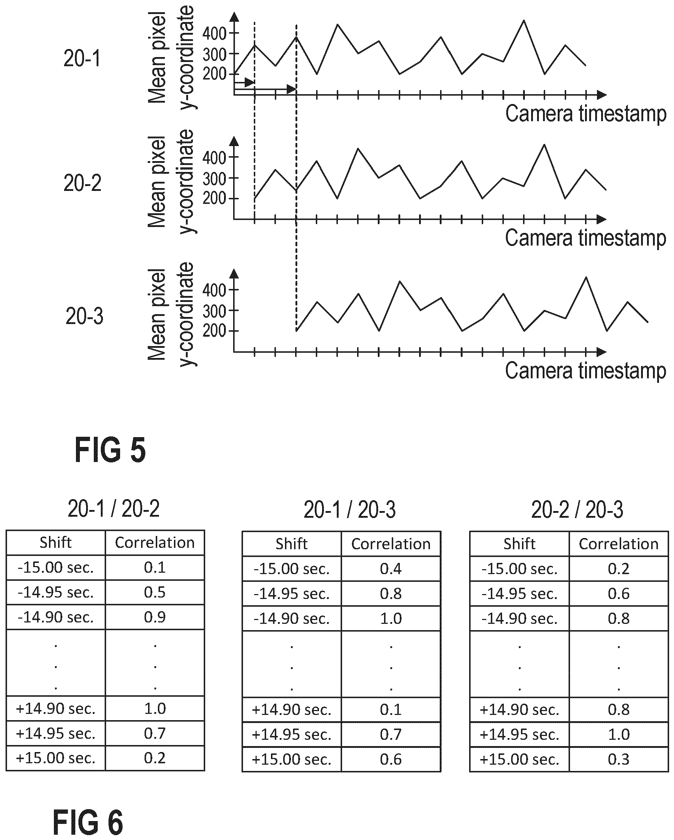

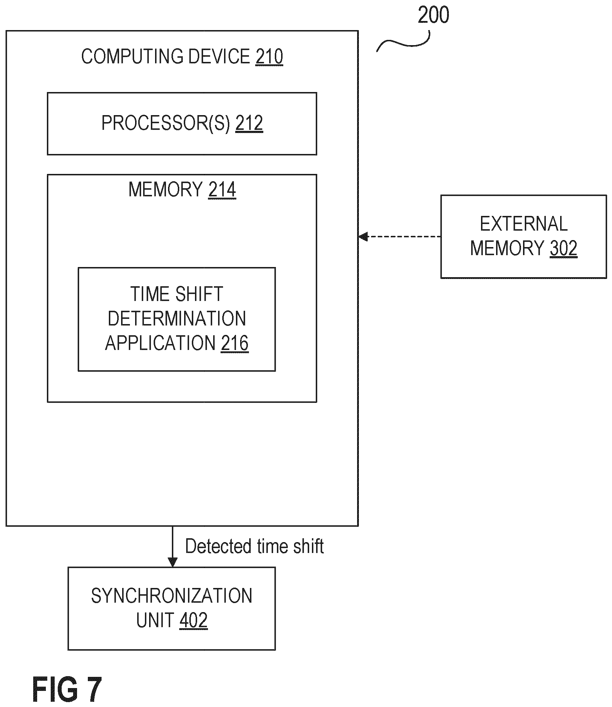

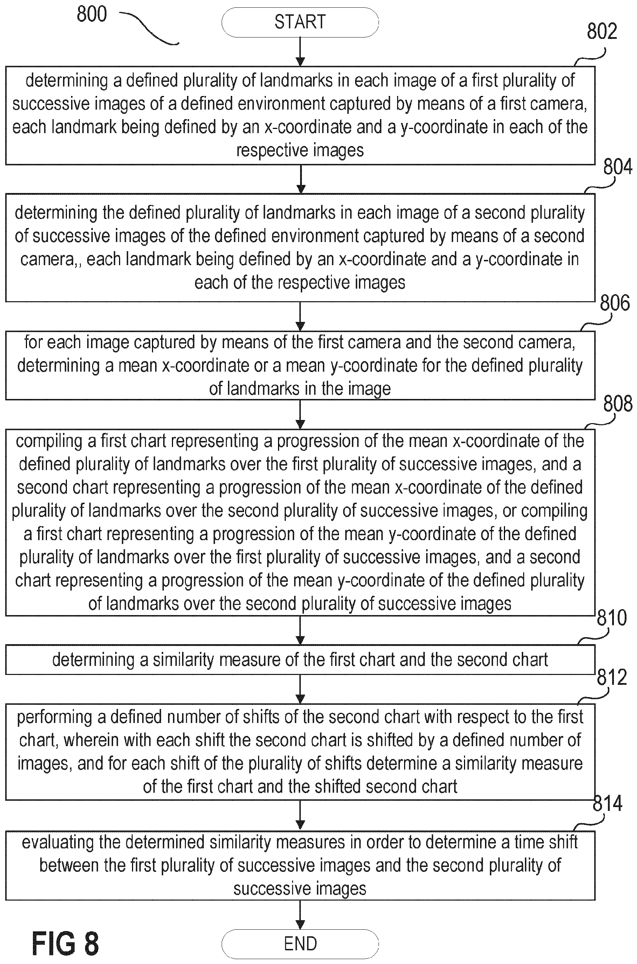

The following description relates to systems for determining time shifts between sequences of successive images captured by means of different cameras. Different applications are known which capture images of a specific environment, event or scene by means of different cameras. Images captured by means of different cameras may subsequently be stitched together, e.g., in order to provide a surround view of the respective environment, event or scene. Many applications do this in real time. However, other applications are known where images of an environment captured by means of different cameras are first stored in memory, and the stitching process will only be performed at a later point in time. In such cases, known methods for real time synchronization of the images captured by means of the different cameras are generally not suitable, as a possible time shift between the images taken by means of the different cameras is not known. The time shift determination unit herein disclosed allows to determine a time shift between sequences of successive images captured by means of different cameras, where the synchronization of the images is not done in real-time. FIG. 1 shows a system comprising a plurality of cameras capturing images of a specific environment or scene. FIG. 2 shows different sequences of successive images of the specific environment or scene as captured by the different cameras of the plurality of cameras. FIG. 3 shows landmarks detected in an image captured by a camera of the plurality of cameras. FIG. 4 shows a chart representing a progression of a mean pixel y-coordinate of a plurality of defined landmarks for a sequence of successive images captured by a camera of the plurality of cameras. FIG. 5 shows different charts representing progressions of a mean pixel y-coordinate of a plurality of defined landmarks for sequences of successive images captured by different cameras of the plurality of cameras. FIG. 6 schematically illustrates similarity measures for different time shifts of two respective charts with respect to each other. FIG. 7 shows a time shift determination unit according to various embodiments of the disclosure, and FIG. 8 shows a method according to various embodiments of the disclosure.

There is an increasing demand for systems comprising multiple cameras which capture a certain scene or environment in a single frame. The different cameras of the system are arranged at different positions in order to be able to capture a defined region of interest from different angles and/or directions, and minimize a number of blind areas. The sequences of successive images captured by the different cameras are then stored, before (optionally) being stitched together. In order to achieve good results when stitching the images, the images captured by the different cameras need to be synchronized. Synchronization may be done with comparably little effort, if the synchronization is done in real-time (during the recording of the images). If, however, the images are stored first, and synchronization is only performed at a later point in time, known methods for real-time camera synchronization usually cannot be applied. The time shift determination unit and related method disclosed herein, allow to determine a time shift between sequences of successive images captured by different cameras. This time shift may then be used to synchronize the sequences of successive images before (optionally) stitching together the images captured by the different cameras. In this way, optimal results may be achieved during the stitching process.

FIG. 1 schematically illustrates a plurality of cameras 20-1, 20-2, 20-3. Each camera of the plurality of cameras 20-1, 20-2, 20-3 is arranged at a different position with respect to a defined scene or environment 100. That is, each camera of the plurality of cameras 20-1, 20-2, 20-3 captures the defined scene or environment 100 from a different position and/or angle. The fieldsof-view of the different cameras 20-1, 20-2, 20-3 overlap at least partially. Each camera of the plurality of cameras 20-1, 20-2, 20-3 captures a sequence of successive images. The sequences of successive images may be stored in a memory, for example. Such memory may be a memory of a time shift determination unit 200, for example. It is, however, also possible that the sequences of successive images are stored in a memory that is separate and distinct from the time shift determination unit 200. It is even possible that different sequences of successive images are stored in different memories.

FIG. 2 schematically illustrates different sequences of successive images. A first sequence of successive images (or frames) f11, f12, f13, ..., fin may be captured by means of a first camera 20-1, a second sequence of successive images f21, f22, f23, ..., f2n may be captured by means of a second camera 20-2, and a third sequence of successive images f31, f32, f33, ..., f3n may be captured by means of a third camera 20-3. The number of images in each of the sequences of identical images may be identical, as is illustrated in FIG. 2. It is, however, generally also possible that the number of images is different for different sequences of successive images. The different sequences of successive images are generally captured during the same period of time. Each image is generally assigned with a defined time stamp, indicating a point in time at which the image was taken. However, stitching together images from the different sequences of successive images that are assigned with the same time stamp may result in highly dissatisfactory results, if a time shift occurs between the sequences of successive images.

For example, a first image f11 in the first sequence of successive images captured by means of the first camera 20-1 and assigned with a first time stamp, may be captured at a first point in time. A first image f21 in the second sequence of successive images captured by means of the second camera 20-2 and assigned with the same first time stamp, may be captured at a second point in time. The second point in time may not be identical to the first point in time. This time shift may be small, e.g., several milliseconds. It is, however, also possible that time shifts in the range of up to several seconds occur. Especially when moving objects (e.g., person 110) are present in the defined environment or scene 100, or when the plurality of cameras 20-1, 20-2, 20-3 move with respect to the defined environment or scene 100 (e.g., cameras mounted on a moving object), any time shifts between respective images captured by the different cameras 20-1, 20-2, 20-3 may result in highly dissatisfactory results, when the images captured by means of the different cameras 20-1, 20-2, 20-3 are stitched together at a later point in time. If a time shift between the sequences of successive images is determined correctly, the images with the correct time stamps may be chosen from the different sequences of successive images, in order to synchronize the sequences of successive images.

FIG. 7 schematically illustrates a shift determination unit 200 according to embodiments of the disclosure in a block diagram. The shift determination unit 200 comprises a computing device 210, the computing device 210 comprising one or more processors 212 and a memory 214. The computing device 210 is configured to receive sequences of successive images stored in an external memory 302. Alternatively or additionally, the computing device 210 may be configured to store sequences of successive images in internal memory 214. The different sequences of successive images are captured by means of different cameras, as has been described with respect to FIG. 1 above. The computing device 210 is configured to execute time shift detection application 216 stored in the memory 214, and determine a time shift between the different sequences of successive images.

Computing device 210 may be any kind of device that includes one or more processor(s) 212 such as a system-on-a-chip (SoC). Generally, computing device 210 may be configured to coordinate the overall operation of the time shift determination unit 200. The embodiments disclosed herein contemplate any technically-feasible system configured to implement the functionality of the time shift determination unit 200 via computing device 210.

Processor(s) 212 may be any technically-feasible form of processing device configured to process data and execute program code. Processor(s) 212 could include, for example and without limitation, a system-on-chip (SoC), a central processing unit (CPU), a graphics processing unit (GPU), an application specific integrated circuit (ASIC), a digital signal processor (DSP), a field programmable gate array (PFGA), and/or the like. Processor(s) 212 may include one or more processing cores. In operation, processor(s) 212 may be a primary processor of the computing device 210, controlling and coordinating operations of other system components. For example, processor(s) 212 may be configured to execute instructions (e.g., methods, algorithms, processes, etc.) stored in memory 214.

Memory 214 stores the shift determination application 216, and may include a memory module or a collection of memory modules. Memory 214 may be non-transitory memory or other form of non-volatile memory, random access memory (RAM), or any other feasible type of memory storage system. In various embodiments, processor(s) 212 can execute the shift determination application 216 to determine a time shift between different sequences of successive images captured by means of different cameras to implement the overall functionality of the computing device 210 and, thus, to coordinate the operation of the time shift determination unit 200 as a whole. For example, sequences of successive images received by the computing device 210 may be processed by the processor(s) 212 to determine a possible time shift between the sequences. In some embodiments, shift determination application 216 may be stored and loaded into the memory 214 for execution.

A shift determination unit 200 according to embodiments of the disclosure comprises a computing device 210 comprising one or more processors 212 and a memory 214. The computing device 210 is configured to determine a defined plurality of landmarks (which may also be referred to as a set of landmarks) in each image of a first plurality of successive images of a defined environment 100 captured by means of a first camera 20-1, each landmark being defined by an x-coordinate and a y-coordinate in each of the respective images. The computing device 210 is further configured to determine the defined plurality of landmarks in each image of a second plurality of successive images of the defined environment 100 captured by means of a second camera 20-2, each landmark being defined by an x-coordinate and a y-coordinate in each of the respective images. For each image captured by means of the first camera 20-1 and the second camera 20-2, the computing device 210 then determines a mean x-coordinate or a mean y-coordinate for each of the defined plurality of landmarks in the image. The computing device 210 is further configured to compile a first chart representing a progression of the mean x-coordinate of the defined plurality of landmarks over the first plurality of successive images, and a second chart representing a progression of the mean x-coordinate of the defined plurality of landmarks over the second plurality of successive images, or compile a first chart representing a progression of the mean y-coordinate of the defined plurality of landmarks over the first plurality of successive images, and a second chart representing a progression of the mean y-coordinate of the defined plurality of landmarks over the second plurality of successive images. The computing device 210 is further configured to determine a similarity measure of the first chart and the second chart, perform a defined number of shifts of the second chart with respect to the first chart, wherein with each shift the second chart is shifted by a defined number of images, and for each shift of the plurality of shifts determine a similarity measure of the first chart and the shifted second chart, and evaluate the determined similarity measures in order to determine a time shift between the first plurality of successive images and the second plurality of successive images. This will be described in further detail in the following.

As described above, the computing device 210 is configured to receive sequences of successive images stored in an external memory 302, and/or retrieve sequences of successive images from internal memory 214. The different sequences of successive images are captured by means of different cameras. According to one example, the sequences of successive images comprise a first sequence of successive images captured by means of a first camera 20-1 and a second sequence of successive images captured by means of a second camera 20-2. Each sequence of successive images comprises a defined number of images fx1, fx2, fx3, ..., fxn. The computing device 210 determines a defined plurality of landmarks in each image fin of the first plurality of successive images of a defined environment 100 captured by means of the first camera 20-1, as well as in each image f2n of a second plurality of successive images of the defined environment 100 captured by means of the second camera 20-2. Each landmark is defined by an x-coordinate and a y-coordinate in each of the respective images. That is, each landmark determined in the images may relate to a specific pixel in the image.

This is schematically illustrated in FIG. 3 for a first image f11 of the first plurality of successive images. In this example, a plurality of face related landmarks (facial landmarks) is detected in the respective image. In the example of FIG. 3, a total of 68 landmarks is detected in the image f11. Such landmarks may relate to a face of a person captured in the plurality of successive images, e.g., to a contour, eyes, nose and/or mouth of a person. Facial landmarks detection is generally a subset of the so-called shape prediction problem. Given an input image (and normally a region of interest, ROI, that specifies the object of interest), a shape predictor localizes key points of interest along the shape. Detecting a total of 68 landmarks, however, is only an example. It is generally possible that even more, or less than 68 landmarks are determined in each image. According to one example, the computing device 210 is configured to determine between 10 and 40 landmarks in each image. According to another example, only facial landmarks related to the nose and mouth of a person captured in the images may be determined and processed further. Alternatively, only facial landmarks related to the eyes and/or nose may be determined, for example. In the example illustrated in FIG. 3, a total of 29 landmarks are determined in the nose and mouth region of the person, which could be used for the subsequent steps. Any other kind of facial landmarks could be used instead. Determining face related landmarks is also only an example. In many situations, no person may be present in a defined scene or environment 100, for example. In such cases, landmarks related to defined objects that are present in the images may be determined. Different methods for determining facial landmarks as well as object related landmarks in images are generally known and will not be described in further detail herein.

However, the same landmarks are (the same set of landmarks is) determined in each image of the different sequences of successive images. That is, if in the images f11, f12, f13, ..., fin of the first sequence of successive images landmarks (a set of landmarks) related to the nose and mouth of a person captured in the images are determined, the same landmarks (the same set of landmarks) related to the nose and mouth of the person are determined in the images of the second sequence of successive images. The same applies for any further sequence of successive images..

Once the defined landmarks (the set of landmarks) have been determined in each of the images fin, f2n of the first and second sequence of successive images, a mean x-coordinate or a mean y-coordinate for each of the defined plurality of landmarks in the respective image will be determined. This will be done for each image captured by means of the first camera 20-1 and the second camera 20-2. That is, for each image fin in the first sequence of successive images, a value is determined which represents either the mean x-coordinate or the mean y-coordinate of all of the defined landmarks in the image. These values are then used by the computing device 210 to compile a first chart representing a progression of the mean x-coordinate of the defined plurality of landmarks over the first plurality of successive images. Similarly, a second chart may be compiled representing a progression of the mean x-coordinate of the defined plurality of landmarks over the second plurality of successive images. Instead of the mean x-coordinates, the mean y-coordinates may also be used. Considering the mean y-coordinates instead of the mean x-coordinates, in some cases, may result in more precise results with respect to the determined time shift. That is, alternatively, the computing device 210 may compile a first chart representing a progression of the mean y-coordinate of the defined plurality of landmarks over the first plurality of successive images, and a second chart representing a progression of the mean y-coordinate of the defined plurality of landmarks over the second plurality of successive images.

A chart representing a progression of the mean y-coordinate of the defined plurality of landmarks (mouth and nose as described with respect to FIG. 1 above) of a first sequence of successive images is exemplarily illustrated in FIG. 4. A movement of the person captured in the different images results in changes of the mean y-coordinate of the respective landmarks from image to image. The images captured by means of a second camera 20-2, are generally captured from a somewhat different angle and different perspective than the images captured by means of the first camera 20-1. The movements of the person captured in the images, however, are the same and therefore result in similar changes of the mean y-coordinate (or mean x-coordinate). That is, by comparing the chart as exemplarily illustrated in FIG. 4 with a chart similarly compiled for the images as captured by the second camera 20-2, a time shift between the sequences of successive images may be determined.

Now referring to FIG. 5, different charts representing progressions of a mean pixel y-coordinate of a plurality of defined landmarks for sequences of successive images captured by different cameras of the plurality of cameras 20-1, 20-2, 20-3 are schematically illustrated. The respective camera timestamp is given on a first coordinate axis (x-axis), and the mean pixel y-coordinate of the defined landmarks in the respective image is given on a second coordinate axis (y-axis). The mean-y-coordinate as such may vary between images of the different sequences of successive images assigned with the same timestamp. However, as the same movements are captured by each of the different cameras, a change of the mean y-coordinate from one image to the other is (essentially) the same, irrespective of the camera the images have been captured with. In the example illustrated in Figure 5, a time shift exists between the images captured by means of the first camera 20-1 and the images captured by means of the second camera 20-2. Similarly, a time shift exists between the images captured by means of the first camera 20-1 and the images captured by means of a third camera 20-3.

Next, the computing device 210 determines a similarity measure of the first chart and the second chart. This results in one similarity measure for the different charts that have not been shifted with respect to each other. The computing device 210 then performs a defined number of shifts of the second chart with respect to the first chart, wherein with each shift the second chart is shifted by a defined number of images. For each shift of the plurality of shifts, the computing device 210 determines a similarity measure of the first chart and the shifted second chart. Each image in the first plurality of images is assigned to a defined timestamp, and each image in the second plurality of images is assigned to a defined timestamp. The defined number of images the second chart is shifted with respect to the first chart with each of the plurality of shifts may correspond to a time lag of 0.05 seconds, for example. This, however, is only an example. The number of images the second chart is shifted with respect to the first chart with each of the plurality of shifts may correspond to a time lag of less than 0.05 seconds, or even more than 0.05 second. A time lag of less than 0.05 may make the time shift determination more accurate, but also more elaborate due to an enlarged computing effort. A time lag of more than 0.05 seconds may reduce the computing effort, but may decrease the accuracy of the time shift determination. According to some examples, the number of images the second chart is shifted with respect to the first chart with each of the plurality of shifts may correspond to a time lag of between 0.01 seconds and 1 second, or between 0.03seconds and 0.08 seconds.

The computing device 210 may be configured to perform between 190 and 380 shifts of the second chart in a first direction (corresponding to positive time shifts), and between 190 and 380 shifts of the second chart in a second direction (corresponding to negative time shifts). This, however, is only an example. A minimum number of shifts may be required in order to make sure that the correct time shift is finally determined. A time shift between the images captured by means of the different cameras 20-1, 20-2, 20-3 may generally be between several milliseconds up to several seconds. A time shift of several seconds, however, cannot be determined if a toosmall number of shifts of the second chart with respect to the first chart is performed. It is generally also possible that there is no time shift between the images captured by means of the different cameras, and the cameras 20-1, 20-2, 20-3 are perfectly synchronized. This may be verified by means of the time shift determination unit 200 and the method described herein.

Now referring to FIG. 6, similarity measures for different time shifts for different pairs of cameras of the plurality of cameras are exemplarily illustrated. This is exemplarily illustrated in different tables. The first table in FIG. 6 illustrates a table showing the different similarity measures for different shifts of the second chart (see chart 20-2 of Figure 5) with respect to the first chart (see chart 20-1 of Figure 5). The similarity measure may generally be determined in any suitable way. According to one example, the computing device 210 may be configured to determine the similarity measure of the first chart and the second chart by determining the Pearson correlation coefficient. The Pearson correlation coefficient (PCC) is a correlation coefficient that measures a linear correlation between two sets of data. It is the ratio between the covariance of two variables and the product of their standard variations. Thus, it is essentially a normalized measurement of the covariance, such that the result always has a value between -1 and +1. Before performing the Pearson correlation coefficient determination, it is also optionally possible to apply a linear interpolation to the respective charts. In this way, regular time series may be obtained, which may solve the problem that camera timestamps often differ for different cameras. FIG. 6 further illustrates exemplary similarity measure tables obtained for camera pairs 20-1/20-3, and 20-2/20-3.

The computing device 210 then continues to evaluate the determined similarity measures in order to determine a time shift between the first plurality of successive images and the second plurality of successive images. According to one example, the computing device 210 may be configured to evaluate the determined similarity measures by selecting the shift comprising the highest similarity measure. According to Pearson correlation coefficient determination, a correlation value of 1.0 would be the best possible result. A similarity value of 0.1 in this example would indicate a low similarity between the respective charts. In the example illustrated in FIG. 6, a similarity measure of 1.0 is determined for a time shift of +14.90 seconds between the images captured by means of the first camera 20-1, and the images captured by means of the second camera 20-2, for example. It may be assumed, therefore, that 14.90 seconds is the correct time shift between the images captured by means of the respective cameras in this specific example. This simple assumption may be made, for example, if only two cameras are involved. If more than two cameras 20-1, 20-2, 20-3 are to be synchronized with each other, a time shift between each pair of cameras may be determined, as is exemplarily illustrated for a total of three cameras 20-1, 20-2, 20-3 in FIG. 6.

If more than two cameras 20-1, 20-2, 20-3 are involved, the results may be further verified. If, for example, a time shift between images captured by means of the first camera 20-1 and images captured by means of the second camera 20-2 is 5 seconds, and a time shift between images captured by means of the second camera 20-2 and images captured by means of the third camera 20-3 is 3 seconds, then the time shift between images captured by means of the first camera 20-1 and images captured by means of the third camera 20-3 is 8 seconds. That is, when for each pair of cameras a potential time shift has been identified (e.g., time shift related to the highest correlation value), the following calculation may be performed for verification:

$$s_{ij} + s_{jk} = s_{ik} \qquad (1)$$

wherein $s_{ij}$ is the time shift between cameras i and j, $s_{jk}$ is the time shift between cameras j and k, and $s_{ik}$ is the time shift between cameras i and k. If the identified time shifts satisfy the calculation, the results may be assumed to be true. If the identified time shifts do not satisfy the calculation, different time shifts may be chosen from the tables as exemplarily illustrated in Figure 6 (e.g., the time shifts with the next best similarity measure).

According to one example, in order to identify the most accurate time shifts which maximize the sum of pairwise similarities with respect to equation (1), a branch-and-bound algorithm may be applied. For each pair of cameras, the shifts of a chart with respect to another chart (see FIG. 5) may be sorted according to the determined similarity measures in descending order. This may accelerate enumeration and assures that the most promising time shifts will be considered first in the following steps. Considering a total of N cameras, enumeration may be started beginning with empty solution S. For cameras 20-1 and 20-2, the shift $s_{12}^1$ with the highest similarity measure may be chosen first, and may be added to current empty solution $S = \{s_{12}^1\}$. The partial solution may be iteratively enlarged by adding the shift of the respective pair of cameras having the maximum similarity measure. When enlarging the partial solution, it may be verified that the resulting partial solution is feasible with respect to equation (1). If the partial solution is not feasible, it may not be enlarged any further, and the respective branch of the branch-and-bound algorithm may be abandoned. Once all partial solutions containing the shift $s_{12}^1$ with the maximum similarity measure for cameras 20-1 and 20-2 have been considered, the respective shift may be removed from a list of possible candidates for the respective pair of cameras, and enumeration may be continued. In order to speed up the enumeration, an upper bound for the current partial solution S may be used:

$$\sum_{s_{ij}^k \in S} w\left(s_{ij}^k\right) + \sum_{(i,j) \in P(S)} \max_{k \in C(i,j)} w\left(s_{ij}^k\right) \qquad (2)$$

Where $w(s_{ij}^k)$ is the similarity measure of shift $s_{ij}^k$, P(S) is the pairs of cameras for which the time shift has not yet been considered, and C(i, j) is the list of candidate indexes of shifts for cameras i und j. If the upper bound for a current partial solution is less than or equal to the sum of pairwise similarities of the best solution that was determined until this point, such partial solution may be abandoned.

Once the most likely time shift between a pair of cameras, or the most likely time shifts between different pairs of cameras of a plurality of cameras have been determined, data representing the determined time shift(s) may be provided, e.g., to a synchronization unit 402 which may then use the determined time shift(s) in order to synchronize the images captured by means of the different cameras. The determined time shift(s), however, may additionally or alternatively be provided to any other unit as well, and may be used for any application for which knowledge of the time shift may be required.

Referring to FIG. 8, a method 800 according to embodiments of the disclosure is schematically illustrated. At 802, method 800 includes determining a defined plurality of landmarks in each image of a first plurality of successive images of a defined environment 100 captured by means of a first camera 20-1, each landmark being defined by an x-coordinate and a y-coordinate in each of the respective images. At 802, method 800 includes determining the defined plurality of landmarks in each image of a second plurality of successive images of the defined environment 100 captured by means of a second camera 20-2, each landmark being defined by an x-coordinate and a y-coordinate in each of the respective images. Such steps may be performed successively or simultaneously.

At 806, method 800 further includes, for each image captured by means of the first camera 20-1 and the second camera 20-2, determining a mean x-coordinate or a mean y-coordinate for each of the defined plurality of landmarks in the image. Method 800 may then proceed with compiling a first chart representing a progression of the mean x-coordinate of the defined plurality of landmarks over the first plurality of successive images, and a second chart representing a progression of the mean x-coordinate of the defined plurality of landmarks over the second plurality of successive images. Alternatively, at 808, method 800 may include compiling a first chart representing a progression of the mean y-coordinate of the defined plurality of landmarks over the first plurality of successive images, and a second chart representing a progression of the mean y-coordinate of the defined plurality of landmarks over the second plurality of successive images.

At 810, method 800 proceeds with determining a similarity measure of the first chart and the second chart. Subsequently, at 812, method 800 includes performing a defined number of shifts of the second chart with respect to the first chart, wherein with each shift the second chart is shifted by a defined number of images, and for each shift of the plurality of shifts determine a similarity measure of the first chart and the shifted second chart. At 814, method 800 proceeds with evaluating the determined similarity measures in order to determine a time shift between the first plurality of successive images and the second plurality of successive images. With this, method 800 ends.

The time shift determination unit herein provided is able to reliably determine a time shift between different sequences of successive images captured by means of different cameras. The determined time shift may be provided to a synchronization unit, for example. The synchronization unit may be configured to synchronize the sequences of successive images for further processing. Further processing may include stitching together images of the different sequences of successive images, e.g., to provide a surround view of a defined scene or environment. The time shift as determined by the time shift determination unit may be considered by the synchronization unit. This results in highly satisfying results, e.g., when subsequently stitching together images of the different sequences of successive images.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A time shift determination unit (200), comprising:
   a computing device (210) comprising one or more processors (212) and a memory (214), wherein the computing device (210) is configured to:

   determine a defined plurality of landmarks in each image of a first plurality of successive images of a defined environment (100) captured by means of a first camera (20-1), each landmark being defined by an x-coordinate and a y-coordinate in each of the respective images;
   determine the defined plurality of landmarks in each image of a second plurality of successive images of the defined environment (100) captured by means of a second camera (20-2), each landmark being defined by an x-coordinate and a y-coordinate in each of the respective images;
   for each image captured by means of the first camera (20-1) and the second camera (20-2), determine a mean x-coordinate or a mean y-coordinate for the defined plurality of landmarks in the image;
   compile a first chart representing a progression of the mean x-coordinate of the defined plurality of landmarks over the first plurality of successive images, and a second chart representing a progression of the mean x-coordinate of the defined plurality of landmarks over the second plurality of successive images, or compile a first chart representing a progression of the mean y-coordinate of the defined plurality of landmarks over the first plurality of successive images, and a second chart representing a progression of the mean y-coordinate of the defined plurality of landmarks over the second plurality of successive images;

determine a similarity measure of the first chart and the second chart;

perform a defined number of shifts of the second chart with respect to the first chart, wherein with each shift the second chart is shifted by a defined number of images, and for each shift of the plurality of shifts determine a similarity measure of the first chart and the shifted second chart; and

evaluate the determined similarity measures in order to determine a time shift between the first plurality of successive images and the second plurality of successive images.

2. The time shift determination unit (200) of claim 1, wherein the computing device (210) is configured to determine between 10 and 40 landmarks in each image.

3. The time shift determination unit (200) of claim 1 or 2, wherein each image in the first plurality of images is assigned to a defined timestamp, and each image in the second plurality of images is assigned to a defined timestamp.

4. The time shift determination unit (200) of claim 3, wherein the defined number of images the second chart is shifted with respect to the first chart with each of the plurality of shifts corresponds to a time lag of between 0.03 seconds and 0.08 seconds.

5. The time shift determination unit (200) of any of claims 1 to 4, wherein the computing device (210) is configured to perform between 190 and 380 shifts of the second chart in a first direction, and to perform between 190 and 380 shifts of the second chart in a second direction.

6. The time shift determination unit (200) of any of the preceding claims, wherein the computing device (210) is configured to determine the similarity measures of the first chart and the second chart by determining the Pearson correlation coefficient.

7. The time shift determination unit (200) of any of the preceding claims, wherein the computing device (210) is configured to evaluate the determined similarity measures by selecting the time shift related to the highest similarity measure.

8. The time shift determination unit (200) of any of the preceding claims, wherein the computing device (210) is further configured to:

determine the defined plurality of landmarks in each image of a third plurality of successive images of the defined environment (100) captured by means of a third camera (20-3);

for each image captured by means of the third camera (20-3), determine a mean x-coordinate or a mean y-coordinate for the defined plurality of landmarks in the image;

compile a third chart representing a progression of the respective mean x-coordinate or y-coordinate of the defined plurality of landmarks over the third plurality of successive images,

determine a similarity measure of the first chart and the third chart;

perform a defined number of shifts of the third chart with respect to the first chart, wherein with each shift the third chart is shifted by a defined number of images, and for each shift of the plurality of shifts determine a similarity measure of the first chart and the shifted third chart; and

evaluate the determined similarity measures in order to determine a time shift between the first plurality of successive images and the third plurality of successive images.

9. The shift determination unit (200) of claim 8, wherein the computing device (210) is further configured to:

determine a similarity measure of the second chart and the third chart;

perform a defined number of shifts of the third chart with respect to the second chart, wherein with each shift the third chart is shifted by a defined number of images, and for each shift of the plurality of shifts determine a similarity measure of the second chart and the shifted third chart; and

evaluate the determined similarity measures in order to determine a time shift between the second plurality of successive images and the third plurality of successive images.

10. The shift determination unit (200) of claim 9, wherein the computing device (210) is configured to evaluate the determined similarity measures by selecting a first time shift, $s_{12}$, of the second chart with respect to the first chart associated with a first similarity measure, a second time shift, $s_{13}$, of the third chart with respect to the first chart associated with a second similarity measure, and a third time shift, $s_{23}$, of the third chart with respect to the second chart associated with a third similarity measure, wherein a sum of the first time shift, $s_{12}$, and the third time shift, $s_{23}$, equals the second time shift, $s_{13}$.

11. A method (800) comprising:

determining a defined plurality of landmarks in each image of a first plurality of successive images of a defined environment (100) captured by means of a first camera (20-1), each landmark being defined by an x-coordinate and a y-coordinate in each of the respective images;
determining the defined plurality of landmarks in each image of a second plurality of successive images of the defined environment (100) captured by means of a second camera (20-2), each landmark being defined by an x-coordinate and a y-coordinate in each of the respective images;
for each image captured by means of the first camera (20-1) and the second camera (20-2), determining a mean x-coordinate or a mean y-coordinate for the defined plurality of landmarks in the image;
compiling a first chart representing a progression of the mean x-coordinate of the defined plurality of landmarks over the first plurality of successive images, and a second chart representing a progression of the mean x-coordinate of the defined plurality of landmarks over the second plurality of successive images, or compiling a first chart representing a progression of the mean y-coordinate of the defined plurality of landmarks over the first plurality of successive images, and a second chart representing a progression of the mean y-coordinate of the defined plurality of landmarks over the second plurality of successive images;
determining a similarity measure of the first chart and the second chart;
performing a defined number of shifts of the second chart with respect to the first chart, wherein with each shift the second chart is shifted by a defined number of images, and for each shift of the plurality of shifts determine a similarity measure of the first chart and the shifted second chart; and
evaluating the determined similarity measures in order to determine a time shift between the first plurality of successive images and the second plurality of successive images.

12. The method (800) of claim 11, further comprising

determining the defined plurality of landmarks in each image of a third plurality of successive images of the defined environment (100) captured by means of a third camera (20-3);
for each image captured by means of the third camera (20-3), determining a mean x-coordinate or a mean y-coordinate for the defined plurality of landmarks in the image;
compiling a third chart representing a progression of the respective mean x-coordinate or y-coordinate of the defined plurality of landmarks over the third plurality of successive images,
determining a similarity measure of the first chart and the third chart;
performing a defined number of shifts of the third chart with respect to the first chart, wherein with each shift the third chart is shifted by a defined number of images, and for each shift of the plurality of shifts determine a similarity measure of the first chart and the shifted third chart; and
evaluating the determined similarity measures in order to determine a time shift between the first plurality of successive images and the third plurality of successive images.

13. The method of claim 12, wherein evaluating the determined similarity measures comprises selecting a first time shift, $s_{12}$, of the second chart with respect to the first chart associated with a first similarity measure, a second time shift, $s_{13}$, of the third chart with respect to the first chart associated with a second similarity measure, and a third time shift, $s_{23}$, of the third chart with respect to the second chart associated with a third similarity measure, wherein a sum of the first time shift, $s_{12}$, and the third time shift, $s_{23}$, equals the second time shift, $s_{13}$.

14. The method of claim 13, wherein evaluating the determined similarity measures comprises applying a branch-and-bound algorithm.

100    110

20-1

20-2    20-3

200

**FIG 1**

20-1    f11    f12    f13    ...    f1n

20-2    f21    f22    f23    ...    f2n

20-3    f31    f32    f33    ...    f3n

**FIG 2**

f11

**FIG 3**

**FIG 4**

20-1

Mean pixel y-coordinate

400
300
200

Camera timestamp

20-2

Mean pixel y-coordinate

400
300
200

Camera timestamp

20-3

Mean pixel y-coordinate

400
300
200

Camera timestamp

# FIG 5

## 20-1 / 20-2

| Shift | Correlation |
|---|---|
| -15.00 sec. | 0.1 |
| -14.95 sec. | 0.5 |
| -14.90 sec. | 0.9 |
| . | . |
| . | . |
| . | . |
| +14.90 sec. | 1.0 |
| +14.95 sec. | 0.7 |
| +15.00 sec. | 0.2 |

## 20-1 / 20-3

| Shift | Correlation |
|---|---|
| -15.00 sec. | 0.4 |
| -14.95 sec. | 0.8 |
| -14.90 sec. | 1.0 |
| . | . |
| . | . |
| . | . |
| +14.90 sec. | 0.1 |
| +14.95 sec. | 0.7 |
| +15.00 sec. | 0.6 |

## 20-2 / 20-3

| Shift | Correlation |
|---|---|
| -15.00 sec. | 0.2 |
| -14.95 sec. | 0.6 |
| -14.90 sec. | 0.8 |
| . | . |
| . | . |
| . | . |
| +14.90 sec. | 0.8 |
| +14.95 sec. | 1.0 |
| +15.00 sec. | 0.3 |

# FIG 6

200

COMPUTING DEVICE 210

PROCESSOR(S) 212

MEMORY 214

TIME SHIFT DETERMINATION APPLICATION 216

EXTERNAL MEMORY 302

Detected time shift

SYNCHRONIZATION UNIT 402

**FIG 7**

800

START

802

determining a defined plurality of landmarks in each image of a first plurality of successive images of a defined environment captured by means of a first camera, each landmark being defined by an x-coordinate and a y-coordinate in each of the respective images

804

determining the defined plurality of landmarks in each image of a second plurality of successive images of the defined environment captured by means of a second camera,, each landmark being defined by an x-coordinate and a y-coordinate in each of the respective images

806

for each image captured by means of the first camera and the second camera, determining a mean x-coordinate or a mean y-coordinate for the defined plurality of landmarks in the image

808

compiling a first chart representing a progression of the mean x-coordinate of the defined plurality of landmarks over the first plurality of successive images, and a second chart representing a progression of the mean x-coordinate of the defined plurality of landmarks over the second plurality of successive images, or compiling a first chart representing a progression of the mean y-coordinate of the defined plurality of landmarks over the first plurality of successive images, and a second chart representing a progression of the mean y-coordinate of the defined plurality of landmarks over the second plurality of successive images

810

determining a similarity measure of the first chart and the second chart

812

performing a defined number of shifts of the second chart with respect to the first chart, wherein with each shift the second chart is shifted by a defined number of images, and for each shift of the plurality of shifts determine a similarity measure of the first chart and the shifted second chart

814

evaluating the determined similarity measures in order to determine a time shift between the first plurality of successive images and the second plurality of successive images

END

# FIG 8

Europäisches
Patentamt
European
Patent Office
Office européen
des brevets

# EUROPEAN SEARCH REPORT

**Application Number**

EP 24 18 8928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/113212 A1 (MITSUBISHI ELECTRIC CORP [JP]) 2 June 2022 (2022-06-02) | 1-3,6-9, 11,12 | INV. G06T7/38 |
| Y | * the whole document * | 4,5 | G06T7/32 |
| A | | 10,13,14 | G06T7/246 |
| | ----- | | |
| Y | US 2017/242442 A1 (MINSTER GAUTIER [US]) 24 August 2017 (2017-08-24) * paragraphs [0021], [0022], [0065] * | 4,5 | |
| | ----- | | |
| A | Camastra Francesco ET AL: "3.6 Image Descriptors" In: "Machine Learning for Audio, Image and Video Analysis", 1 January 2015 (2015-01-01), XP093231364, * 81  3.6.1; page 82 * | 1 | |
| | ----- | | |

**TECHNICAL FIELDS SEARCHED (IPC)**

G06T

The present search report has been drawn up for all claims

| Place of search | Date of completion of the search | Examiner |
|---|---|---|
| Munich | 9 December 2024 | Frias Velazquez, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 8928

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | Publication date | Patent family member(s) | Publication date |
|---|---|---|---|
| WO 2022113212 A1 | 02-06-2022 | JP 6983364 B1 | 17-12-2021 |
| | | JP WO2022113212 A1 | 02-06-2022 |
| | | WO 2022113212 A1 | 02-06-2022 |
| US 2017242442 A1 | 24-08-2017 | CN 108628301 A | 09-10-2018 |
| | | DE 102018106353 A1 | 20-09-2018 |
| | | US 2017242442 A1 | 24-08-2017 |

EPO FORM P0459

For more details about this annex : see Official Journal of the European Patent Office, No. 12/82